# EUROPÄISCHE PATENTSCHRIFT

(11) **EP 3 208 664 B1**
(45) Veröffentlichungstag und Bekanntmachung des Hinweises auf die Patenterteilung: **16.08.2023**
(21) Anmeldenummer: 16156588.2
(22) Anmeldetag: 19.02.2016
(51) Int. Cl.: G04B 13/00, G04B 15/14, G04B 17/32, G04B 29/02, G04B 43/00, C23C 18/34, C22C 30/00, C22C 19/07, C22C 9/00, B32B 15/01, G04B 31/008, G04B 37/22

(54) **UHRWERK ODER UHR OHNE MAGNETISCHE SIGNATUR**
TIMEPIECE MECHANISM OR CLOCK WITHOUT MAGNETIC SIGNATURE
MECANISME HORLOGER OU HORLOGE SANS SIGNATURE MAGNETIQUE

(43) Veröffentlichungstag der Anmeldung: 23.08.2017
(73) Patentinhaber: Omega SA, 2502 Biel/Bienne (CH)
(72) Erfinder: Gaugey, Guillaume, 25300 Doubs (FR)
(74) Vertreter: ICB SA

(56) Entgegenhaltungen:
- EP-A1- 1 422 436
- EP-A1- 1 449 888
- EP-A1- 2 680 090
- WO-A2-2014/154511
- CH-A2- 707 503
- CH-A4- 1 392 072
- CH-A5- 681 370
- US-A- 3 620 005
- MATTHIAS WOLF: "IWC Ocean 2000 BUND, ZEITZEUGE: Geheimnisträger Jürgen King", IWC WATCH INTERNATIONAL, Nr. 3/0225, 4. September 2006 (2006-09-04) , XP055294291,
- Adrian Van Der Meijden ET AL: "The IWC Ocean Bund Diver's Watch 1", Horological Journal, 1. Januar 2009 (2009-01-01), XP055295100, Gefunden im Internet: URL:http://milspectime.com/wp-content/uplo ads/2013/04/IWC-Bund-Watches_HJ_Adrian1.pd f [gefunden am 2016-09-08]
- French Berylco: "Berylco rod and wire alloys - NGK Berylco", , 21. August 2015 (2015-08-21), XP055308602, Gefunden im Internet: URL:https://web.archive.org/web/2015082116 3406/http://www.ngk-alloys.com/berylco_wro ught3.html [gefunden am 2016-10-07]
- Alloy Wire International: "Phynox also known as Elgiloy - AMS 5833, AMS 5834", , 3. September 2015 (2015-09-03), XP055307618, Gefunden im Internet: URL:https://web.archive.org/web/2015090304 2926/http://www.alloywire.com/phynox_alloy .html [gefunden am 2016-10-04]
- Beryllium Science & Technology Association, BeST: "Wrought Copper Beryllium Alloy Compositions", , 31. Januar 2016 (2016-01-31), XP055307617, Gefunden im Internet: URL:https://web.archive.org/web/2016013106 0251/http://beryllium.eu/about-beryllium-a nd-beryllium-alloys/properties-of-berylliu m/properties-of-beryllium-alloys/wrought-c opper-beryllium-alloy-compositions/ [gefunden am 2016-10-04]
- Adrian Van Der Meijden: "Are Ocean Bunds really rare watches?", IWC.com/forum, 7 March 2012 (2012-03-07), page 2, XP055490761, IWC.com Retrieved from the Internet: URL:https://www.iwc.com/forum/en/discussio n/57566/?page=2 [retrieved on 2018-07-06]

## Beschreibung

### Technisches Gebiet

Die Erfindung bezieht sich auf ein mechanisches Uhrwerk und eine mechanische Uhr ohne magnetische Signatur und ein Verfahren zur Herstellung eines solchen.

### Stand der Technik

Es gibt bestimmte Situationen, in denen jedweder Magnetismus unerwünscht oder gar gefährlich ist. So können im Bereich Kampfmittelräumung bereits geringe Magnetfelder genügen, um einen Induktionszünder einer Bombe oder Mine auszulösen. Deshalb verlangt der NATO Standard STANAG 2897 für die Überprüfung amagnetischer Werkzeuge zum Einsatz im Rahmen der Kampfmittelräumung eine gesamte magnetische Signatur von höchstens 5 nT (nano Tesla).

Elektrische oder mechanische Uhren mit Metallteilen des Stands der Technik haben immer eine magnetische Signatur. Die elektrischen Ströme von Digital- oder Quartz-Uhren erzeugen für diese Situationen relativ hohe Magnetfelder und erzeugen somit eine starke magnetische Signatur. Aber selbst rein mechanische Uhren haben aufgrund der verwendeten Metalle immer Restmagnetisierungen, die bereits eine zu starke magnetische Signatur erzeugen. Diese Restmagnetisierungen stammen von im täglichen Leben vorkommenden Magnetfeldern, die metallische Teile magnetisieren, so dass die metallischen Teile nachfolgend auch ohne bestehende Magnetfelder eine Restmagnetisierung aufweisen. Aus diesem Grund können in Magnetfeld-sensiblen Situationen keine Uhren getragen werden.

Der Einfluss einer Uhr auf die Umwelt ist aber ein in der Uhrenindustrie nicht bekanntes Problem, da diese sich nur auf die Problematik der Verringerung des Einflusses von Magnetfeldern auf den Gang einer mechanischen Uhr konzentriert.

Zur Lösung der letztgenannten Problematik ist aus DE1932257 bekannt, für einen Teil der beweglichen Teile eines Uhrwerks amagnetische Materialien mit einer magnetischen relativen Permeabilität kleiner 1,01 zu verwenden. Allerdings sind nicht alle Teile des Uhrwerks amagnetisch, so dass die offenbarte Lösung zwar eine gute Funktion der Uhr in einem Magnetfeld bietet, aber nicht verhindern kann, dass die restlichen beweglichen und/oder unbeweglichen Teile der Uhr mit einer Permeabilität grösser 1,01 nach dem Verlassen des Magnetfelds eine Restmagnetisierung aufweisen. Insbesondere wird keine Lösung für für Triebwellen zu verwendende, amagnetische Materialen offenbart.

Zusätzlich zu der fehlenden Problematik einer amagnetischen Uhr, würde ein Uhrmacher die Realisierung eines metallischen Uhrwerks ausschliesslich aus amagnetischen Metallen als nicht realisierbar betrachten, da die in der Uhrindustrie bekannten amagnetischen Metalle die zahlreichen Anforderungen wie Verarbeitbarkeit, Verschleiss, Härte, Zusammenspiel mit anderen Teilen, etc., in einem Uhrwerk nicht erfüllen können. Dies betrifft insbesondere die für die Triebwellen benutzten Metalle, aber auch die Vielzahl an Kleinteilen, wie z.B. gefrästen Federn, etc..

Ähnliche Probleme treten bei anderen Messinstrumenten, wie z.B. Tiefenmesser, Druckmesser, Geschwindigkeitsmesser, Höhenmesser, auf.

In den Artikeln «IWC Ocean 2000 BUND, ZEITZEUGE: Geheimnisträger Jürgen King» von Matthias Wolf, veröffentlich in IWC WATCH INTERNATIONAL, Nr. 3/0225, am 4.9.2006 und «The IWC Ocean Bund Diver's Watch 1» von Adrian Van Der Meijden et al, veröffentlicht in Horological Journal 1, am 1.1.2009 wurde eine Uhr beschrieben, die angeblich dem in dem Nato Standard 2897 beschriebenen amagnetischen Verhalten genügt. Diese Uhr wurde aber ausschliesslich an das deutsche Militär verkauft, und IWC ist zu Stillschweigen über die technische Ausführung dieser Uhr verpflichtet. Diese Artikel offenbaren keine ausführbare technische Lehre, um eine solche Uhr herzustellen.

### Darstellung der Erfindung

Deshalb ist es ein Ziel, ein Uhrwerk und eine Uhr zu finden, dessen Einfluss auf die Umwelt minimal ist.

Dieses Ziel wird durch eine mechanische Uhr nach Anspruch 13 erreicht.

Dieses Ziel wird durch ein mechanisches Uhrwerk nach Anspruch 1 erreicht.

Durch die ausschliessliche Verwendung von Einzelteilen, die eine relative magnetische Permeabilität kleiner als 1,01 haben, ist kein Teil des Uhrwerks oder der Uhr in einem Magnetfeld magnetisierbar. Somit zeigt ein solches Uhrwerk selbst nach dem Aussetzen von hohen Magnetfeldern keine Restmagnetisierungen. Dadurch wird der Einfluss des Uhrwerks auf die Umwelt reduziert.

Weitere vorteilhafte Ausführungsformen sind in den abhängigen Ansprüchen angegeben.

In einem Ausführungsbeispiel weist das mechanische Uhrwerk oder die Uhr mindestens ein Teil auf, das aus Berylliumkupfer hergestellt ist und mit einer die Härte des Berylliumkupfers vergrössernden Beschichtung, vorzugsweise mit einer Nickelschicht, gehärtet ist. Das aus diesem Metall hergestellte mindestens eine Teil ist vorzugsweise eine Welle zur drehbaren Lagerung von einem weiteren Teil. Diese Metalllegierung ist amagnetisch und weich genug, um die für Uhrwerke komplexen Formen der Welle in einer Uhr, wie z.B. eine Ritzelwelle, zu spanen oder fräsen. Durch die vorzugsweise nachfolgende Härtung des Materials mit einer amagnetischen Beschichtung wird einerseits die magnetische Eigenschaft der Welle nicht verschlechtert und andererseits die notwendige Härte erreicht, um die Erfordernisse für Verschleiss, Reibung und Ganggenauigkeit des Uhrwerks zu erfüllen. Dieses in der Uhrmacherei, insbesondere für Ritzelwellen, unbekannte Material zeichnet sich durch seine Amagnetizität, seine gute Verarbeitbarkeit und seine Härte aus. Wellen und andere Teile aus dieser Metalllegierung können auch in anderen Uhrwerken oder anderen Messinstrumenten als den oben beschriebenen Uhrwerken oder Messinstrumenten Verwendung finden.

In einem Ausführungsbeispiel ist mindestens ein Teil des Uhrwerks oder der Uhr aus einer Legierung hergestellt, die als Hauptbestandteile Kobalt, Chrom, Eisen und Nickel aufweist. Dieses in der Uhrmacherei aufgrund der schlechten Verarbeitbarkeit nicht verwendete Material zeichnet sich durch seine Amagnetizität und seine für die oben genannten Teile guten Materialeigenschaften aus. Das mindestens eine Teil aus dieser Legierung ist vorzugsweise eines oder mehrere einer Feder, eines Hemmungsrads, eines Hemmstücks, eines Spiralklötzchenhalters, einer Brücke, insbesondere einer Tourbillonkäfigbrücke, und/oder eines Tourbillons (oder Teile dieses) des Uhrwerks. Insbesondere der Tourbillonkäfig eines Tourbillons sind vorteilhafterweise aus dieser Legierung hergestellt. Federn, Hemmungsräder, Hemmstücke, Brücken, Spiralklötzchen und/oder Tourbillons für Uhrwerke oder andere Teile aus dieser Legierung können auch in anderen Uhrwerken als den oben beschriebenen Uhrwerken Verwendung finden.

In einem Ausführungsbeispiel ist mindestens ein Teil des Uhrwerks oder der Uhr aus einem amagnetischen Edelstahl hergestellt. Der amagnetische Edelstahl weist vorzugsweise mehr als 10%, vorzugsweise mehr als 15% Chrom auf. Das mindestens eine Teil ist zum Beispiel die Aufzugswelle des Uhrwerks. Dieses Material hat den Vorteil rostfrei zu sein und hohe Kräfte auszuhalten. Aufgrund der schwierigen Verarbeitbarkeit werden amagnetische Edelstähle in der Uhrmacherei normalerweise nicht verwendet.

In einem Ausführungsbeispiel weist das Uhrwerk ein Gehäuse aus Titan auf.

In einem Ausführungsbeispiel weist das Uhrwerk mindestens ein Zahnrad und/oder ein Federhaus auf, das aus einer Kupferlegierung, insbesondere aus einer Kupferlegierung, aufweisend 7,5 Prozent Nickel und 5 Prozent Zinn, hergestellt ist.

In einem Ausführungsbeispiel weist das Uhrwerk eine Platine und mindestens eine Brücke auf, die aus Messing hergestellt sind.

### Figurenbeschreibung

Die Erfindung wird mit Hilfe der nachfolgenden Figuren näher beschrieben:
Fig. 1 zeigt einen Schnitt durch ein Ausführungsbeispiel eines Uhrwerks;
Fig. 2 zeigt einen ersten vergrösserten Ausschnitt der Fig. 1;
Fig. 3 zeigt einen zweiten vergrösserten Ausschnitt der Fig. 1;
Fig. 4 zeigt eine dreidimensionale Ansicht eines Ausführungsbeispiels der Antriebswelle;
Fig. 5 zeigt einen Schnitt durch ein Ausführungsbeispiel der Antriebswelle;
Fig. 6 zeigt eine dreidimensionale Ansicht eines Ausführungsbeispiels der Unruhewelle;
Fig. 7 zeigt einen Schnitt durch ein Ausführungsbeispiel der Unruhewelle;
Fig. 8 zeigt eine dreidimensionale Ansicht eines Ausführungsbeispiels einer Ritzelwelle;
Fig. 9 zeigt einen Schnitt durch ein Ausführungsbeispiel der Ritzelwelle;
Fig. 10 zeigt eine dreidimensionale Ansicht eines Ausführungsbeispiels der Hemmstückwelle;
Fig. 11 zeigt einen Schnitt durch ein Ausführungsbeispiel der Hemmstückwelle;

### Wege zur Ausführung der Erfindung

Nachfolgend wird beschrieben wie es gelungen ist, eine Uhr, ein Uhrwerk und eine Welle für ein Uhrwerk herzustellen, die bzw. deren Einzelteile eine relative magnetische Permeabilität kleiner als 1,01 hat bzw. haben. Die Realisierung geht dabei soweit, dass alle Einzelteile eine relative magnetische Permeabilität kleiner als 1,0100 haben. Vorzugsweise ist die relative magnetische Permeabilität zwischen 0,99 und 1,01 bzw. 1,0100. Vorzugsweise handelt es sich bei der Uhr um eine Armband- oder Taschenuhr, wobei dieses Uhrwerk aber auch in anderen Uhren verbaut werden kann. Wenn im Folgenden von einem amagnetischen Material oder Teil gesprochen wird, ist damit ein Material oder Teil mit einer relativen magnetischen Permeabilität kleiner als 1,01, vorzugsweise kleiner 1,0100 gemeint.

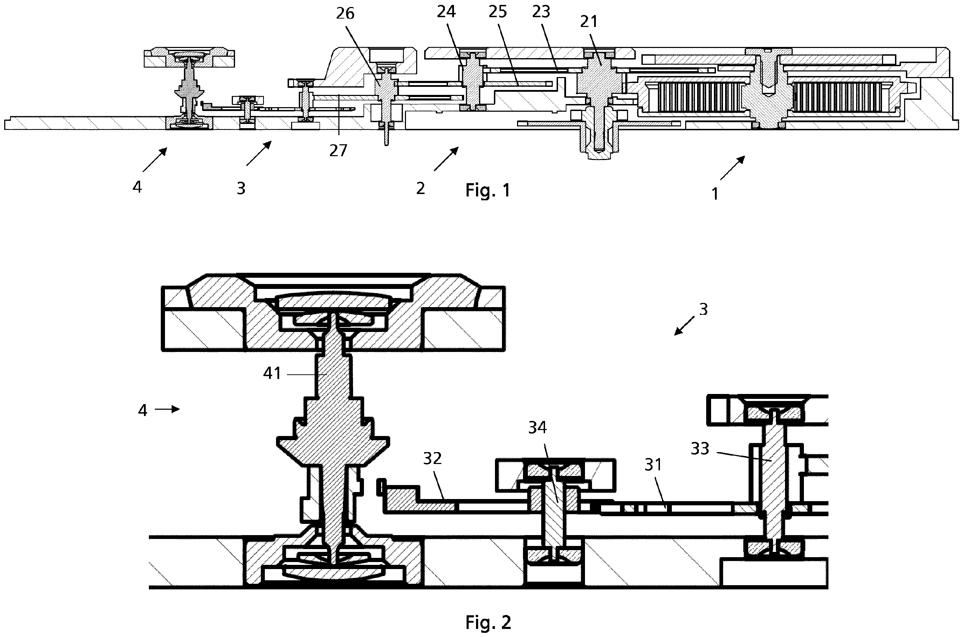

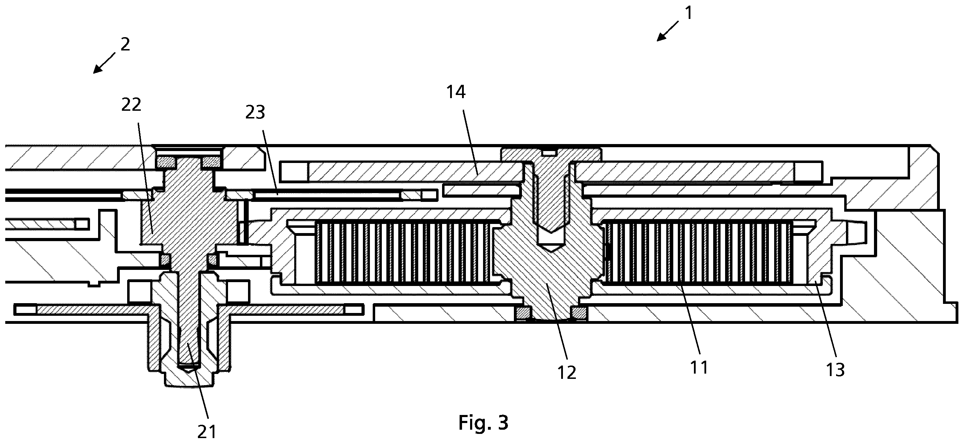

Das Uhrwerk weist ein Gehwerk und optionale Zusatzwerkwerke auf. Fig. 1 zeigt einen Schnitt durch ein Ausführungsbeispiel eines solchen Uhrwerks, während Fig. 2 und 3 vergrösserte Ausschnitte aus Fig. 1 zeigen.

Das Gehwerk weist einen Antriebsmechanismus 1, ein Räderwerk 2, ein Hemmungssystem 3 und ein Schwingsystem 4 auf.

Der Antriebsmechanismus 1 speichert die Energie für den Betrieb des Uhrwerks und ist so mit dem Räderwerk 2 gekoppelt, dass er diese Energie an das Räderwerk 2 abgibt. Der Antriebsmechanismus 1 weist dafür einen Energiespeicher und einen Aufzugsmechanismus auf. Vorzugsweise ist der Energiespeicher eine Antriebsfeder 11, vorzugsweise in Form einer Spiralfeder. Die Antriebsfeder 11 ist vorzugsweise aus dem amagnetischen Material Nivaflex (registrierte Marke) hergestellt. Diese spiralförmige Antriebsfeder 11 ist vorzugsweise zwischen einer Antriebswelle 12 und einem auf der Antriebswelle 12 drehbar gelagerten Federhaus 13 angeordnet. Durch den Aufzugsmechanismus kann die Antriebswelle 12 gedreht werden und die Antriebsfeder 11 aufgezogen werden. Der Aufzugsmechanismus weist vorzugsweise eine Aufzugswelle und/oder einen automatischen Aufzugsmechanismus mit einem Automatikgetriebe und einer Schwungmasse auf. In Fig. 1 und Fig. 3 ist das Zahnrad 14 des Aufzugsmechanismus gezeigt, welches die Antriebswelle 12 dreht.

Das Räderwerk 2 weist eine Kombination von Wellen, Ritzeln (Trieben) und Zahnrädern auf, die den Antriebsmechanismus 1, insbesondere einen Zahnkranz an der Umfangsseite des Federhauses 13, mit einem bestimmten Übersetzungsverhältnis mit dem Hemmungssystem 3 verbindet. Jede der Wellen, die mindestens ein Ritzel aufweist, wird auch als Ritzelwelle bezeichnet. Vorzugsweise ist das mindestens eine Ritzel und die Welle der Ritzelwelle aus einem Materialblock gespant, vorzugsweise gefräst, während das Zahnrad drehfest auf der Ritzelwelle oder der Welle verbunden ist. Eine Eingangsritzelwelle 21 des Räderwerks 2 ist mit seinem Ritzel 22 mit dem Antriebsmechanismus 1 verbunden, während ein Zahnrad 27 einer Ausgangswelle 26 des Räderwerks 2 in das Hemmungssystem 3 eingreift. Das Räderwerk 2 weist zum Beispiel drei Wellen 21, 24, 26 und drei auf diesen Wellen 21, 24, 26 befestigten Zahnräder 23, 25, 27 auf. Allerdings sind auch komplexere oder einfachere Räderwerke mit mehr oder weniger Wellen und Rädern möglich.

Das Hemmungssystem 3 ist zwischen dem Räderwerk 2 und dem Schwingsystem 4 angeordnet, so dass das Räderwerk 2 beim Durchlaufen jeder von dem Schwingsystem 4 vorgegebenen Schwingung um einen vorbestimmten Drehwinkel weitergedreht wird. Das Hemmungssystem 3 weist vorzugsweise ein Hemmungsrad 31 und ein Hemmstück 32, z.B. einen Anker, auf. Das Hemmungsrad 31 ist drehfest auf einer Hemmungsradwelle 33 befestigt und über die drehbar gelagerte Hemmungsradwelle 33 drehbar. Ein Ritzel der Hemmungsradwelle 33 ist mit dem Zahnrad 27 der Ausgangswelle 26 des Räderwerks 2 verbunden. Das Hemmstück 32 ist drehfest auf einer Hemmstückwelle 34 befestigt und über die drehbar gelagerte Hemmstückwelle 34 drehbar. Das Hemmstück 32 hemmt die durch die Antriebsfeder 11 verursachte Drehung des Hemmungsrads 31 und gibt das Hemmungsrad 31 ein oder zweimal pro Schwingung des Schwingsystems 4 für die Drehung des Hemmungsrads 31 bzw. des Räderwerks 2 um den vorbestimmten Drehwinkel frei. Auf dem Hemmstück 32 sind vorzugsweise an den Kontaktstellen mit dem Hemmungsrad 31 Paletten aus Edelstein, vorzugsweise aus (synthetischen) Rubin angeordnet. Die Paletten können aber auch aus einem Metall, z.B. aus dem später beschriebenen Phynox oder Silizium hergestellt werden. Die Paletten können auch aus einem Block mit dem Hemmstück 32 als eine Einheit hergestellt werden. Je nach Hemmungsmechanismus kann das Hemmstück 32 auch aus mehreren relativ zueinander drehbaren Teilen bestehen und/oder das Hemmungsrad 31 auch aus mehreren relativ zueinander drehbaren Teilen bestehen.

Das Schwingsystem 4 schwingt mit einem konstanten Takt und löst ein oder zwei Mal pro Schwingung das Hemmungssystem 3 bzw. das Hemmstück 32 aus, um so die vorbestimmte Drehung des Räderwerks 2 bzw. des Hemmungsrads 31 zu verursachen. Vorzugsweise weist das Schwingsystem 4 eine drehbar gelagerte Unruhewelle 41, eine (nicht dargestellte) Spiralfeder und eine (nicht dargestellte) Unruhemasse auf. Auf der Unruhewelle 41 ist in der Regel ein Plateau mit einer Ellipse ausgebildet. Die Unruhewelle 41 und das Plateau oder das Plateau und die Ellipse oder alle drei können aus einem Materialblock als Einheit hergestellt werden. Allerdings ist es auch möglich alle drei Teile aus drei Materialblöcken herzustellen. In einem Ausführungsbeispiel ist das Plateau aus dem später beschriebenen gehärteten Berylliumkupfer, aus Silizium, aus dem später beschriebenen Declafor, aus dem später beschriebenen Phynox oder aus Nivaflex hergestellt. Ein Plateau aus Phynox oder Silizium könnte die Ellipse aus dem gleichen Materialblock ausbilden. Die Ellipse ist aus einem Edelstein, vorzugsweise einem (synthetischen) Rubin, Silizium oder dem später beschriebenen Phynox hergestellt. Die Unruhemasse ist z.B. aus dem später beschriebenen Declafor, aus dem später beschriebenen gehärteten Berylliumkupfer oder Messing hergestellt.

Vorzugsweise sind die beschriebenen (und nicht beschriebenen) Wellen zur drehbaren Lagerung von Teilen aus einer gehärteten Kupferlegierung hergestellt. Die Kupferlegierung ist vorzugsweise ein Berylliumkupfer. Das Berylliumkupfer weist vorzugsweise Blei auf. Die Kupferlegierung besteht vorzugsweise aus 1,8 % bis 2 % Beryllium (Be), 0,2 % bis 0,6 % Blei (Pb), aus weniger als 1,1 % andere Materialien und ansonsten aus Kupfer (Cu). Die weniger als 1,1 % andere Materialien weisen vorzugsweise ein Gesamtgehalt von Kobalt (Co) und Nickel (Ni) von mindestens 0,2 %, einen Gesamtgehalt von Kobalt (Co) und Nickel (Ni) und Eisen (Fe) von maximal 0,6 % und maximal 0,5 % andere Materialien auf (Prozentangaben relativ zum Gesamtgewicht der Legierung). Die hier und im Folgenden gemachten Prozentangaben des Materialgehalts einer Legierung beziehen sich dabei immer auf die Gewichtsprozente sofern nicht anders erwähnt. Aus einem Materialblock dieser Kupferlegierung wird die gewünschte Welle gespannt, vorzugsweise gedreht und gefräst. Zum Erreichen einer Oberflächengüte mit geringer Rautiefe wird vorzugsweise ein Diamant als Schneidwerkzeug verwendet. Aufgrund der Härte des Materials von nur ca. 380 HV (Vickerhärte) lässt sich dieses Material gut bearbeiten, was insbesondere für nicht rotationssymmetrische Elemente wie auf einer Ritzelwelle ausgebildete Ritzel wichtig ist. Nach dem Formen der gewünschten Welle findet vorzugsweise noch ein Polierschritt, vorzugsweise ein mechanisch-chemischer Polierschritt statt. Daraufhin wird die aus der Kupferlegierung geformte Welle durch Auftragen einer amagnetischen Schicht gehärtet. Als amagnetische Schicht wird vorzugsweise Nickel verwendet. Die Schicht ist vorzugsweise dicker als 0,5 µm (Mikrometer), vorzugsweise dicker als 2,5 µm. Diese Schicht kann z.B. durch eine Galvanisierung und/oder chemisches Vernickeln aufgetragen werden. Durch diese Beschichtung kann Härte von mehr als 600 HV, vorzugsweise mehr als 700 HV, vorzugsweise mehr als 800 HV erreicht werden. Die geformte Welle aus der beschriebenen Kupferlegierung mit der chemischen Vernickelung mit einer Dicke von 3 µm wird eine Härte von ca. 900 HV erreicht. Eine so hergestellte Welle vereint optimal die Eigenschaften der guten Formung der Welle vor der Beschichtung, der für einen verschleissarmen und ganggenauen Betrieb des Uhrwerks notwendigen Härte der Welle nach der Beschichtung und der amagnetischen Eigenschaft der Welle.

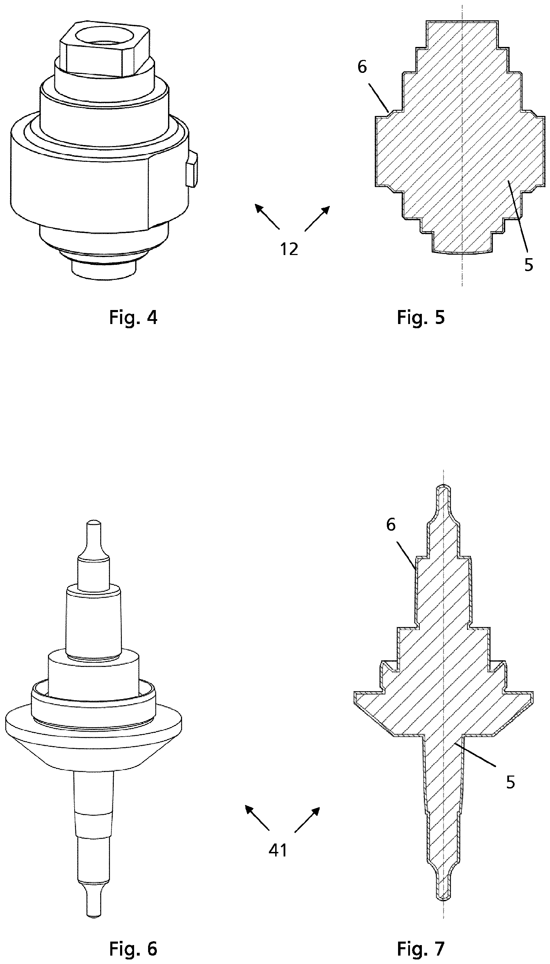

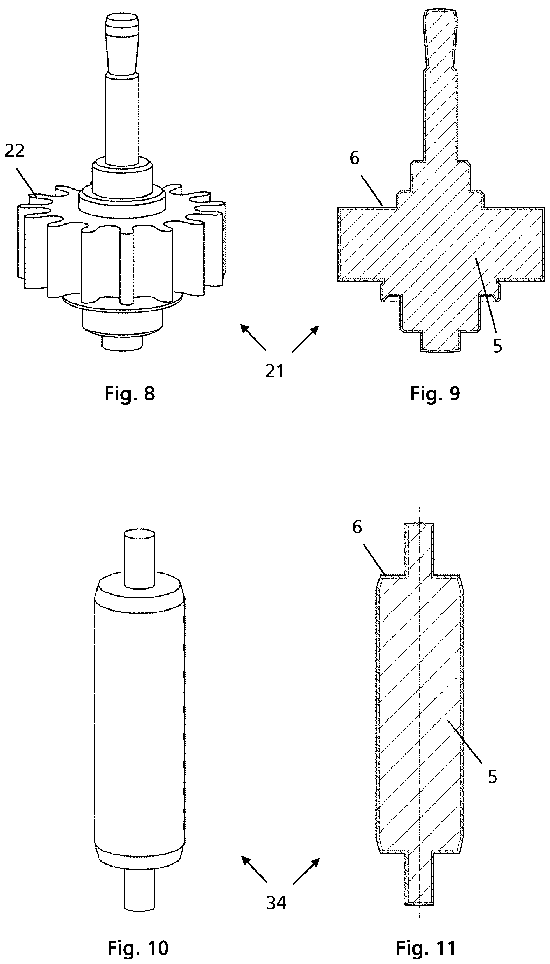

Beispiele der Antriebswelle 12 (Fig. 4 und 5), der Unruhewelle 41 (Fig. 6 und 7), der zentralen Ritzelwelle 21 (Fig. 8 und 9) und der Hemmstückwelle 34 (Fig. 10 und 11) aus dem zur Härtung Beschichteten Berylliumkupfer sind in den Fig. 4 bis 11 gezeigt. Dabei ist der Kern 5 der jeweiligen Welle in der jeweiligen Form aus einem Materialblock aus Berylliumkupfer hergestellt. Dieser Kern 5 ist daraufhin mit einer amagnetischen Beschichtung 6, vorzugsweise Nickel, beschichtet.

Einige oder alle der Wellen sind vorzugsweise auf Edelsteinen, vorzugsweise (synthetischen) Rubinen gelagert. Die Wellen sind vorzugsweise zwischen einer Platine und einer Brücke drehbar gelagert. Die Platine und die Brücke werden vorzugsweise aus Messing, vorzugsweise aus CuZn38Pb2 hergestellt. Das Messing wird entweder wie zuvor für die Wellen beschrieben durch eine Beschichtung, insbesondere eine Nickelbeschichtung, gehärtet oder durch eine Vergoldung geschützt.

Vorzugsweise ist/sind mindestens eine Welle, insbesondere die Aufzugswelle, und/oder die Krone vorzugsweise aus einem amagnetischen Edelstahl hergestellt. Solche Edelstähle sind sehr selten und sehr schwer bearbeitbar und deshalb in der Uhrenbranche bisher unbekannt. Solche Edelstahle werden zum Beispiel in der Medizintechnik verwendet. Vorzugsweise weist ein solcher amagnetischer Edelstahl einen Chromium (Cr) Anteil von mehr als 10%, vorzugsweise mehr als 15 % auf. Ein Beispiel ist der Edelstahl X2CrNiMo18-15-3 (DIN Kurzbezeichnung) bestehend aus maximal 0,03 % Kohlenstoff (C), maximal 0,75% Silizium (Si), maximal 2% Mangan (Mn), maximal 0,025% Phosphor (P), maximal 0,003 % Schwefel (S), zwischen 17% und 19% Chrom (Cr), zwischen 2,7 und 3 % Molybdenum (Mo), zwischen 13% und 15% Nickel (Ni), maximal 0,5% Kupfer (Cu), maximal 0,1 % Stickstoff und ansonsten Eisen (Fe). Ein alternatives Beispiel für einen solchen amagnetischen Edelstahlt mit Chrom ist der unter dem Markennamen Biodur 108 bekannte Edelstahl (UNS S 29108) bestehend aus maximal 0,08 % Kohlenstoff (C), maximal 0,75% Silizium (Si), zwischen 21 % und 24 % Mangan (Mn), maximal 0,03% Phosphor (P), maximal 0,01 % Schwefel (S), zwischen 19% und 23% Chrom (Cr), zwischen 0,5 und 1,5 % Molybdenum (Mo), maximal 0,1% Nickel (Ni), maximal 0,25% Kupfer (Cu), maximal 0,9 % Stickstoff (N) und ansonsten Eisen (Fe).

Das Hemmstück, das Hemmungsrad und die in dem Uhrwerk verwendeten Federn (sofern nicht explizit anders beschrieben) werden aus einer Legierung hergestellt, die als Hauptbestandteile Eisen, Nickel, Chrom und Kobalt (vorzugsweise auch Molybdän und Mangan) aufweist. Vorzugsweise besteht die Legierung aus den folgenden Elementen: zwischen 39 und 41 Prozent Kobalt (Co), zwischen 19 und 21 Prozent Chrom (Cr), zwischen 15 und 18 Prozent Nickel (Ni), zwischen 6,5 und 7,5 Prozent Molybdän (Mo), zwischen 1,5 und 2,5 Prozent Mangan (Mn), weniger als 3 Prozent sonstige Materialien und einem Restgehalt von Eisen. Vorzugsweise enthalten die weniger als 3% sonstige Materialien weniger als 0,15 % Kohlenstoff (C), weniger als 1,2 % Silicium (Si), weniger als 0,001 Beryllium (Be), weniger als 0,015 % Phosphor (P), weniger als 0,015 Schwefel (S) (Prozentangaben relativ zum Gesamtgewicht der Legierung). Dieses Material wird auch als Phynox (registrierte Marke) bezeichnet. Vorzugsweise werden die aus diesem Material geformten Teile vor, während und/oder nach der Formgebung einer Ausscheidungshärtung (Durcissement structural) unterzogen, um so die Teile härter zu machen. Damit können trotz der Verwendung von amagnetischen Materialien Härten von über 500 HV, insbesondere ca. 600 HV erreicht werden. Vorzugsweise werden die Teile vor dem Härten einer Grobformung, z.B. durch eine CNC Fräse, unterzogen und nach dem Härten einer Feinformung unterzogen. Danach werden die geformten und gehärteten Teile vorzugsweise noch einer mechanisch chemischen Polierung unterzogen.

Das Hemmstück und das Hemmungsrad können alternativ auch aus Silizium hergestellt werden.

Auch die Schrauben, die normalerweise aus Stahl hergestellt werden, können in einer amagnetischen Uhr nicht verwendet werden. Deshalb werden die Schrauben aus einer Titanlegierung hergestellt. In einem Ausführungsbeispiel wird die so genannten Titan grade 5 Legierung (3.7165 / DIN TiAl6V4) verwendet, die neben Titan aus zwischen 5,5% und 6,75% Aluminium (Al), zwischen 3,5% und 4,5% Vanadium und weniger als 2% andere Materialien besteht. Vorzugsweise enthalten die weniger als 2% sonstige Materialien weniger als 0,3 % Eisen (Fe), weniger als 0,2 % Sauerstoff (O), weniger als 0,05 % Stickstoff (N), weniger als 0,08 % Kohlenstoff (C), weniger als 0,015 % Wasserstoff (H) (Prozentangaben relativ zum Gesamtgewicht der Legierung). Vorzugsweise werden die aus diesem Material geformten Teile vor, während und/oder nach der Formgebung einer Ausscheidungshärtung unterzogen, um so die Teile härter zu machen. Damit können trotz der Verwendung von amagnetischen Materialien Härten von über 250 HV, insbesondere ca. 350 HV erreicht werden. Danach werden die geformten und gehärteten Teile vorzugsweise noch einer mechanisch chemischen Polierung unterzogen.

Das Federhaus und die Zahnräder des Räderwerks sind vorzugsweise aus Declafor (registrierte Marke) hergestellt, d.h. einer Kupferlegierung mit Nickel und Zinn, genauer einer Kupferlegierung bestehend aus 7,5% Nickel (Ni), 5 % Zinn (Sn), weniger als 1,85 % andere Materialien und ansonsten Kupfer (Cu). Die weniger als 1,85 % andere Materialien weisen zum Beispiel zwischen 0,05 % und 0.3 % Mangan (Mn), maximal 0,5 % Zink (Zn), maximal 0,5 % Eisen (Fe), maximal 0,03 % Blei (Pb), maximal 0,02 % Phosphor (P) und maximal 0,5 % andere Materialen auf. Vorzugsweise werden die aus diesem Material geformten Teile vor, während und/oder nach der Formgebung einer Ausscheidungshärtung unterzogen, um so die Teile härter zu machen. Damit können trotz der Verwendung von amagnetischen Materialien Härten von über 250 HV, insbesondere ca. 320 HV erreicht werden. Danach werden die geformten und gehärteten Teile vorzugsweise noch einer mechanisch chemischen Polierung und/oder einer Vergoldung unterzogen.

Das beschriebene Uhrwerk ist vorzugsweise in einer Uhr verbaut, insbesondere in einer Armband- oder Taschenuhr. Wenn das Gehäuse und/oder das Armband aus einem metallischen Material hergestellt sind, so wird dafür vorzugsweise eine Titanlegierung, wie z.B. die oben beschriebene, verwendet.

## Patentansprüche

1. Mechanisches Uhrwerk mit metallischen Teilen, wobei jedes Teil des mechanischen Uhrwerks eine relative magnetische Permeabilität kleiner als 1,01 aufweist.

2. Mechanisches Uhrwerk nach Anspruch 1, aufweisend mindestens eine Welle (12, 21, 24, 26, 33, 34, 41) aus Metall zur drehbaren Lagerung von Teilen des Uhrwerks.

3. Mechanisches Uhrwerk nach Anspruch 2, wobei die mindestens eine Welle (12, 21, 24, 26, 33, 34, 41) aus einem Berylliumkupfer (5) hergestellt ist und mit einer die Härte des Berylliumkupfers vergrössernden auf das Berylliumkuper aufgetragenen Beschichtung (6) gehärtet ist.

4. Mechanisches Uhrwerk nach Anspruch 3, wobei die Beschichtung (6) eine Nickelschicht ist.

5. Mechanisches Uhrwerk nach Anspruch 3 oder 4, wobei das Berylliumkupfer (5) der mindestens einen Welle (12, 21, 24, 26, 33, 34, 41) mindestens 0,2 % Blei aufweist.

6. Mechanisches Uhrwerk nach einem der Ansprüche 2 bis 5, wobei die mindestens eine Welle (12, 21, 24, 26, 33, 34, 41) mindestens eine Ritzelwelle (21, 24, 26, 33) aufweist, wobei die Ritzelwelle ein Ritzel (22) und eine Welle aufweist, wobei das Ritzel (22) und die Welle der mindestens einen Ritzelwelle (21, 24, 26, 33) eine aus einem Materialblock hergestellte Einheit bilden.

7. Mechanisches Uhrwerk nach einem der Ansprüche 2 bis 6, wobei die mindestens eine Welle (12, 21, 24, 26, 32, 33, 41) eine oder mehrere aus einer Unruhewelle (41) zur drehbaren Lagerung der Unruhe, einer Hemmstückwelle (34) zur drehbaren Lagerung des Hemmstücks (32), einer Antriebswelle (12) zur drehbaren Lagerung des Antriebmechanismus (1) und einer Aufzugswelle zur drehbaren Lagerung des Aufziehmechanismus aufweist.

8. Mechanisches Uhrwerk nach einem der Ansprüche 1 bis 7, wobei mindestens ein Teil, insbesondere eine Feder, ein Hemmungsrad, ein Hemmstück, eine Brücke, ein Spiralklötzchen und/oder ein Tourbillon, aus einer Legierung hergestellt ist, die als Hauptbestandteile Kobalt, Chrom, Eisen und Nickel, und aufweist.

9. Mechanisches Uhrwerk nach Anspruch 8, wobei die Legierung aus den folgenden Elementen besteht:
zwischen 39 und 41 Prozent Kobalt,
zwischen 19 und 21 Prozent Chrom,
zwischen 15 und 18 Prozent Nickel,
zwischen 6,5 und 7,5 Prozent Molybdän,
zwischen 1,5 und 2,5 Prozent Mangan,
weniger als 3 Prozent sonstige Materialien und
einem Restgehalt von Eisen.

10. Mechanisches Uhrwerk nach einem der Ansprüche 1 bis 9, wobei mindestens ein Teil, insbesondere eine Mehrzahl von Schrauben, aus einer Titanlegierung besteht.

11. Mechanisches Uhrwerk nach einem der Ansprüche 1 bis 10, wobei mindestens ein Teil, insbesondere eine Spiralfeder einer Unruhe, ein Hemmungsrad und/oder ein Hemmstück, aus Silizium hergestellt ist.

12. Mechanisches Uhrwerk nach einem der Ansprüche 1 bis 11, aufweisend mindestens ein Teil aus einem amagnetischen Edelstahl, der mehr als 10% Chrom aufweist.

13. Mechanische Uhr aufweisend ein mechanisches Uhrwerk nach einem der Ansprüche 1 bis 12, wobei alle Einzelteile der Uhr eine relative magnetische Permeabilität kleiner als 1,01 aufweisen.

14. Verfahren zur Herstellung eines mechanischen Uhrwerks aufweisend:
Herstellen der Einzelteile des mechanischen Uhrwerks, wobei die Einzelteile zumindest teilweise aus Metall sind und jedes Einzelteil eine relative magnetische Permeabilität kleiner als 1,01 aufweist; und
Zusammenbauen der Einzelteile zu einem mechanischen Uhrwerk.

## Claims

1. A mechanical watch mechanism having metallic parts, wherein each part of the mechanical watch mechanism has a relative magnetic permeability of less than 1.01.

2. The mechanical watch mechanism as claimed in claim 1, having at least one shaft (12, 21, 24, 26, 33, 34, 41) composed of metal for the rotatable mounting of parts of the watch mechanism.

3. The mechanical watch mechanism as claimed in claim 2, wherein the at least one shaft (12, 21, 24, 26, 33, 34, 41) is produced from a beryllium copper (5) and is hardened with a coating (6) applied onto the beryllium copper which increases the hardness of the beryllium copper.

4. The mechanical watch mechanism as claimed in claim 3, wherein the coating (6) is a nickel layer.

5. The mechanical watch mechanism as claimed in claim 3 or claim 4, wherein the beryllium copper (5) of the at least one shaft (12, 21, 24, 26, 33, 34, 41) has at least 0.2% lead.

6. The mechanical watch mechanism as claimed in any one of claims 2 to 5, wherein the at least one shaft (12, 21, 24, 26, 33, 34, 41) has at least one pinion shaft (21, 24, 26, 33), wherein the pinion shaft has a pinion (22) and a shaft, wherein the pinion (22) and the shaft of the at least one pinion shaft (21, 24, 26, 33) form a unit produced from one material block.

7. The mechanical watch mechanism as claimed in any one of claims 2 to 6, wherein the at least one shaft (12, 21, 24, 26, 32, 33, 41) has one or more of: a balance wheel shaft (41) for the rotatable mounting of the balance wheel, an escapement piece shaft (34) for the rotatable mounting of the escapement piece (32), a drive shaft (12) for the rotatable mounting of the drive mechanism (1) and a winding shaft for the rotatable mounting of the winding mechanism.

8. The mechanical watch mechanism as claimed in any one of claims 1 to 7, wherein at least one part, in particular a spring, an escapement wheel, an escapement piece, a bridge, a stud and/or a tourbillon, is produced from an alloy which, as main constituents, has cobalt, chromium, iron and nickel.

9. The mechanical watch mechanism as claimed in claim 8, wherein the alloy is composed of the following elements:
between 39 and 41 percent cobalt,
between 19 and 21 percent chromium,
between 15 and 18 percent nickel,
between 6.5 and 7.5 percent molybdenum,
between 1.5 and 2.5 percent manganese,
less than 3 percent other materials and
a residual content of iron.

10. The mechanical watch mechanism as claimed in any one of claims 1 to 9, wherein at least one part, in particular a multiplicity of screws, is composed of a titanium alloy.

11. The mechanical watch mechanism as claimed in any one of claims 1 to 10, wherein at least one part, in particular a spiral spring of a balance wheel, an escapement wheel and/or an escapement piece, is produced from silicon.

12. The mechanical watch mechanism as claimed in any one of claims 1 to 11, having at least one part composed of an amagnetic high-grade steel which has more than 10% chromium.

13. A mechanical watch having a mechanical watch mechanism as claimed in any one of claims 1 to 12, wherein all individual parts of the watch have a relative magnetic permeability of less than 1.01.

14. A method for producing a mechanical watch mechanism, including:
producing the individual parts of the mechanical watch mechanism, wherein the individual parts are at least partially composed of metal and each individual part has a relative magnetic permeability of less than 1.01; and
assembling the individual parts to form a mechanical watch mechanism.

## Revendications

1. Mécanisme horloger avec des parties métalliques, dans lequel chaque partie du mécanisme horloger présente une perméabilité magnétique relative inférieure à 1,01.

2. Mécanisme horloger selon la revendication 1, présentant au moins un arbre (12, 21, 24, 26, 33, 34, 41) en métal pour le logement rotatif de parties du mécanisme.

3. Mécanisme horloger selon la revendication 2, dans lequel l'au moins un arbre (12, 21, 24, 26, 33, 34, 41) est fabriqué en un cuivre de béryllium (5) et est durci avec un revêtement (6) appliqué sur le cuivre de béryllium, augmentant la dureté du cuivre de béryllium.

4. Mécanisme horloger selon la revendication 3, dans lequel le revêtement (6) est une couche de nickel.

5. Mécanisme horloger selon la revendication 3 ou 4, dans lequel le cuivre de béryllium (5) de l'au moins un arbre (12, 21, 24, 26, 33, 34, 41) présente au moins 0,2 % de plomb.

6. Mécanisme horloger selon l'une quelconque des revendications 2 à 5, dans lequel l'au moins un arbre (12, 21, 24, 26, 33, 34, 41) présente au moins un arbre de pignon (21, 24, 26, 33), dans lequel l'arbre de pignon présente un pignon (22) et un arbre, dans lequel le pignon (22) et l'arbre d'au moins un arbre de pignon (21, 24, 26, 33) forment une unité fabriquée en un bloc de matériau.

7. Mécanisme horloger selon l'une quelconque des revendications 2 à 6, dans lequel l'au moins un arbre (12, 21, 24, 26, 32, 33, 41) présente un ou plusieurs d'un axe de balancier (41) pour le logement rotatif du balancier, un axe de pièce d'arrêt (34) pour le logement rotatif de la pièce d'arrêt (32), un arbre d'entraînement (12) pour le logement rotatif du mécanisme d'entraînement (1) et d'une tige de remontoir pour le logement rotatif du mécanisme remontoir.

8. Mécanisme horloger selon l'une quelconque des revendications 1 à 7, dans lequel au moins une partie, en particulier un ressort, une roue de rencontre, une pièce d'arrêt, un pont, un piton et/ou un tourbillon, est fabriquée en un alliage qui présente comme constituants principales du cobalt, du chrome, du fer et du nickel.

9. Mécanisme horloger selon la revendication 8, dans lequel l'alliage se compose des éléments suivants :
entre 39 et 41 pour cent de cobalt,
entre 19 et 21 pour cent de chrome,
entre 15 et 18 pour cent de nickel,
entre 6,5 et 7,5 pour cent de molybdène,
entre 1,5 et 2,5 pour cent de manganèse,
moins de 3 pour cent d'autres matériaux et
une teneur restante de fer.

10. Mécanisme horloger selon l'une quelconque des revendications 1 à 9, dans lequel au moins une partie, en particulier une pluralité de vis, se compose d'un alliage de titane.

11. Mécanisme horloger selon l'une quelconque des revendications 1 à 10, dans lequel au moins une partie, en particulier un ressort en spirale d'un balancier, une roue de rencontre et/ou une pièce d'arrêt, est fabriquée en silicium.

12. Mécanisme horloger selon l'une quelconque des revendications 1 à 11, présentant au moins une partie en un acier spécial non-magnétique qui présente plus de 10 % de chrome.

13. Instrument horaire mécanique présentant un mécanisme horloger selon l'une quelconque des revendications 1 à 12, dans lequel toutes les parties individuelles de l'instrument horaire présentent une perméabilité magnétique relative inférieure à 1,01.

14. Procédé de fabrication d'un mécanisme horloger présentant :
la fabrication des parties individuelles du mécanisme horloger, dans lequel les parties individuelles sont au moins partiellement en métal et chaque partie individuelle présente une perméabilité magnétique relative inférieure à 1,01 ; et
l'assemblage des parties individuelles en un mécanisme horloger.
